Europäisches Patentamt

European Patent Office

Office européen des brevets

(11) Publication number: **0 234 641**

**A1**

# EUROPEAN PATENT APPLICATION

(21) Application number: **87200211.8**

(22) Date of filing: **12.02.87**

(51) Int. Cl.⁴: **C09D 3/64**

(30) Priority: **14.02.86 NL 8600387**

(43) Date of publication of application:
**02.09.87 Bulletin 87/36**

(84) Designated Contracting States:
**AT BE CH DE FR GB GR IT LI LU NL SE**

(71) Applicant: **AKZO N.V.**
**Velperweg 76**
**NL-6824 BM Arnhem(NL)**

(72) Inventor: **Geerdes, Dirk Jacobus Frederik**
**Haamiltonlaan 15**
**NL-4631 NX Hoogerheide(NL)**
Inventor: **Nelen, Petrus Jacobus Cornelia**
**Looipad 20**
**NL-4641 TD Ossendrecht(NL)**
Inventor: **Zabel, Klaus Hans**
**Burgemeester Caen van Necklaan 309**
**NL-2262 GL Leidschendam(NL)**

(74) Representative: **Sieders, René et al**
**P.O. Box 314**
**NL-6800 AH Arnhem(NL)**

(54) **Coating composition having a high solids content and containing an organic solvent with a high flash point.**

(57) The invention pertains to a coating composition having a high solids content and containing an organic solvent with a flash point of at least 55°C, wherein the binder is an oxidatively drying alkyd resin which is built up on the one hand from 30-85 mole % of an ethylenically unsaturated monocarboxylic acid containing 6-24 carbon atoms and 15-70 mole % of a polycarboxylic acid containing 4-36 carbon atoms and on the other hand from 10-80 mole % of a hydroxyl and/or epoxy compound containing an allyl ether group and 20-90 mole % of an at least trivalent hydroxyl compound containing 3-24 carbon atoms, which alkyd resin has a number average molecular weight of 1400-2800, an acid number of 0-30, a hydroxyl number of 0-80 and a solubility parameter of 8,5-11,0 and wherein the organic solvent has a boiling point in the range of from 140°-260°C.

## Coating composition having a high solids content and containing an organic solvent with a high flash point

The invention relates to a coating composition having a solids content of at least 80% by weight, based on an oxidatively drying binder, a siccative and an organic solvent with a flash point of at least 55°C.

The traditionally employed compositions have a solids content of only about 45-70% by weight, because a higher solids content would lead to compositions having an unacceptably high application viscosity. Although the addition of air drying vegetable oils results in a higher solids contents, it negatively affects drying, durability and hardness of the coating composition applied. As examples of the normally used organic solvents may be mentioned toluene, xylene and white spirit. A great disadvantage to such solvents is their low flash point; toluene, for instance, has a flash point of 4°C, xylene 24°-27°C and white spirit 40°-41°C. Whereas replacement of these solvents with solvents having a flash point of at least 55°C does increase the safety of using compositions containing such solvents, it may give rise to an increase in application viscosity of these compositions.

The present invention has for its object to combine the use of an organic solvent having a flash point of at least 55°C with an oxidatively drying binder in a coating composition having a solids content of at least 80% by weight. This composition not only displays a good application viscosity, but also provides a coat having the required properties. Finally, because of its increased solids content, the composition displays enhanced hiding power and/or increased efficiency.

The coating composition is characterized according to the invention in that the oxidatively drying binder is an alkyd resin which is built up on the one hand from 30-85 mole % of an ethylenically unsaturated monocarboxylic acid containing 6-24 carbon atoms and 15-70 mole % of a polycarboxylic acid containing 4-36 carbon atoms and on the other hand from 10-80 mole % of a hydroxyl and/or epoxy compound containing an allyl ether group and 20-90 mole % of an at least trivalent hydroxyl compound containing 3-24 carbon atoms, which alkyd resin has a number average molecular weight of 1400-2800, an acid number of 0-30, a hydroxyl number of 0-80 and a solubility parameter of 8,5-11,0 and the organic solvent has a boiling point in the range of from 140°-260°C.

As examples of suitable ethylenically unsaturated monocarboxylic acids from which the alkyd resin according to the invention is partly built up may be mentioned monounsaturated, aliphatic monocarboxylic acids such as oleic acid, but preferably polyunsaturated, aliphatic monocarboxylic acids with isolated and/or conjugated double C-C bonds, such as sorbic acid, linseed oil fatty acid, soy-bean oil fatty acid, sunflower oil fatty acid, safflower oil fatty acid, wood oil fatty acid, dehydrated castor oil fatty acid, tall oil fatty acid or isomerized unsaturated fatty acids. Examples of other applicable monocarboxylic acids include tetrahydrobenzoic acid and a partly or not partly hydrogenated abietic acid or isomer thereof. It is preferred that use should be made of safflower oil fatty acid, sunflower oil fatty acid and/or linseed oil fatty acid. Optionally, the monocarboxylic acids referred to above may entirely or partly be used as triglyceride, for instance as vegetable oil, in the preparation of the alkyd resin. If desired, use may be made of mixtures of 2 or more of such monocarboxylic acids or triglycerides, optionally together with one or more saturated, - (cyclo)aliphatic or aromatic monocarboxylic acids, such as pivalic acid, 2-ethylcaproic acid, lauric acid, palmitic acid, stearic acid, cyclopentane carboxylic acid, cyclohexane carboxylic acid, naphthenic acid, benzoic acid, 2-methyl benzoic acid, 4-tert. butyl benzoic acid and 2,4-dimethyl benzoic acid. It is preferred that in the preparation of the alkyd resin the monocarboxylic acid should be used in an amount such that it forms 50-80 mole % of the total amount of carboxylic acids.

As examples of suitable polycarboxylic acids from which the alkyd resin according to the invention is partly built up may be mentioned (cyclo)aliphatic or aromatic di-, tri-or tetracarboxylic acids, such as phthalic acid, isophthalic acid, terephthalic acid, 5-tert.butyl isophthalic acid, trimellitic acid, pyromellitic acid, succinic acid, adipic acid, 2,2,4-trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2-dicarboxylic acid, tetrahydrophthalic acid, endomethylene cyclohexane-1,2-dicarboxylic acid, endoisopropylidene cyclohexane-1,2-dicarboxylic acid, 1,4,5,6,7,7-hexachlorobicyclo-(2,2,1)-5-heptene-2,3-dicarboxylic acid, cyclohexane-1,2,4,5-tetracarboxylic acid, butane-1,2,3,4-tetracarboxylic acid and adducts of ethylenically unsaturated carboxylic acids such as acrylic acid, maleic acid and fumaric acid to ethylenically unsaturated monocarboxylic acids such as 5(6)-carboxy-4-hexyl-2-cyclohexene-1-octanoic acid. Optionally, the above-envisaged carboxylic acids may be used as anhydride or in the form of an ester, for instance an ester of an alcohol containing 1-4 carbon atoms. It is preferred that the polycarboxylic acid should be used in an amount such that it forms 20-50 mole % of the total amount of carboxylic acids.

As examples of suitable hydroxyl or epoxy compounds containing an allyl ether group from which the alkyd resin according to the invention is partly built up may be mentioned the mono-and diallyl ethers of trimethylol ethane, trimethylol propane and glycerol, the hydroxyl group-containing allyl ethers of pentaerythritol, dipentaerythritol, sorbitol and ditrimethylol propane, and compounds such as allylglycidyl ether. It is preferred that the allyl ether group-containing hydroxyl or epoxy compounds should contain 1-5 hydroxyl groups or 1-2 epoxy group and 1-5 allyl ether groups; more particularly the mono-and diallyl ethers of trimethylol propane. It is preferred that these compounds be used in an amount of 15-75 mole %, more particularly 20-60 mole %, based on the total amount of hydroxyl and epoxy compounds.

Examples of suitable, at least trivalent hydroxyl compounds from which the alkyd resin according to the invention is partly built up include glycerol, trimethylol ethane, trimethylol propane, pentaerythritol, sorbitol and etherification products of the above-envisaged compounds, such as ditrimethylol propane and di-, tri- and tetrapentaerythritol. As in this group of compounds the term hydroxyl compound not only covers a compound having a hydroxyl group, but also a compound having an epoxy group -which in the preparation of the alkyd resin according to the invention acts as if it were a compound having hydroxyl groups, with each epoxy group corresponding to 2 hydroxyl groups -compounds such as glycidol are also applicable. It is preferred that use should be made of compounds containing 3-12 carbon atoms, such as glycerol, pentaerythritol and/or dipentaerythritol. It is preferred that these compounds should be used in an amount of 25-85 mole %, more particularly 40-80 mole %, based on the total amount of hydroxyl and epoxy compounds.

Optionally, use may be made of an alkyd resin modified with compounds containing both a carboxyl group and a hydroxyl group, such as 2,2-dimethylol propionic acid, 12-hydroxy stearic acid and 2-hydroxy-1,2,3-propane tricarboxylic acid; with (cyclo)aliphatic or aromatic polyisocyanates, for instance toluene diisocyanate, hexamethylene diisocyanate or isophoron diisocyanate; with carboxylic acids such as acrylic acid or methacrylic acid; with mono-and diols such as linoleyl alcohol, stearyl alcohol, ethylene glycol, propylene glycol, butane diol and diethylene glycol; with hydroxy or alkoxy functional silanes, siloxanes or silicones; and with reactive phenol compounds.

The alkyd resin to be used in the coating composition according to the invention preferably has a number average molecular weight of 1600-2600, and acid number of 5-15, a hydroxyl number of 10-50 and a solubility parameter of 9,0-10,5. The solubility parameter is determined as indicated in J. Appl. Chem. 3, 71 (1953).

Further, the present alkyd resins preferably have an average functionality of 2,0-4,0, more particularly between 2,0 and 3,0. By the average functionality of the alkyd resin is to be understood here the ratio of the sum of the number of hydroxyl and epoxy groups of the compounds which do not contain an allyl ether group and have at least 3 hydroxyl groups and the groups reacting with them, such as carboxyl and isocyanate groups, of the compounds containing at least two of such reactive groups (expressed in equivalents), which have reacted with each other in the preparation of the alkyd resin, to the sum of the number of moles of said polyfunctional compounds. The alkyd resins according to the invention defined by this high average functionality display a higher degree of branching at one and the same molecular weight and have a higher number of double bonds from the allyl ether compound and the unsaturated monocarboxylic acid. Despite their relatively low molecular weight these alkyd resins impart a good drying character and excellent hardness to the coat of paint obtained with it.

The polycondensation reaction for the preparation of the alkyd resin is as a rule carried out at a temperature of 140°-300°C, preferably at 180°-260°C, and in an inert atmosphere of nitrogen and/or carbon dioxide. The water evolving in the polycondensation reaction can be removed in the usual manner, for instance by distillation under reduced pressure or by azeotropic distillation while using an organic solvent, such as xylene. If desired, this solvent may be removed from the alkyd resin by distillation after termination of the polycondensation reaction. As esterification catalyst may be used any generally applied compound, such as sulphuric acid, p-toluene sulphonic acid, benzene sulphonic acid, naphthalene sulphonic acid, and metal compounds, such as dibutyltin oxide and dibutyltin dilaurate, but the presence of a catalyst is optional.

As suitable siccatives may be mentioned metal salts of (cyclo)aliphatic acids, such as octanoic acid and naphthenic acid, the applicable metals being, for instance, cobalt, manganese, lead, zirconium, calcium, zinc and rare earth metals. Generally, mixtures of siccatives may be used.

Preferred metal salts are salts of cobalt, zirconium and calcium, or mixtures thereof. The siccatives - (calculated as metal) are usually applied in an amount of 0,001 to 3% by weight, calculated on the alkyd resin as dry matter.

0 234 641

As examples of suitable organic solvents having a flash point of at least 55°C and a boiling point between 140° and 260°C may be mentioned aliphatic, cycloaliphatic or aromatic hydrocarbons containing on average 9-16 carbon atoms per molecule, alcohol ethers and alcohol ether acetates or mixtures thereof. As examples of such solvents may be mentioned hydrocarbon solvents available under the trade marks Shellsol H, Shellsol K and Shellsol AB, all from Shell Chemicals, and under the trade mark Solvesso-150 of Esso, and compounds such as ethyl diglycol, ethylglycol acetate, butyl glycol, butyl glycol acetate, butyl diglycol, butyl diglycol acetate and methoxypropylene glycol acetate. It is preferred that the solvent should have a boiling point in the range of 170° to 230°C. The coating composition may optionally contain small amounts of ethers, esters, ketones, alcohol esters and alcohols and glycols, provided that the flash point of the total organic solvent does not decrease to a temperature below 55°C. If desired, small amounts of water may also be present in the composition, or be added to some pigment system, if present.

The coating composition according to the invention may optionally contain all kinds of additives or adjuvants, such as pigments, colouring agents, fillers, photoinitiators, UV-absorbers, UV-stabilizers, antioxidants, antiozanants, gloss-reducing agents, sag control agents, sterically hindered amines, bactericides, fungicides, anti-skinning agents, perfumes, foam suppressing agents, drying stabilizers, finely dispersed waxes and polymers such as hydrocarbon resins, colophonium resins, phenol resins and ketone resins. Examples of suitable photoinitiators are acyl phosphine oxides, such as the product available under the trade mark Lurycin LR 8728 of BASF.

As suitable pigments may be mentioned natural or synthetic, transparent or non-transparent pigments. As examples of suitable pigments may be mentioned titanium dioxide, red iron oxide, orange iron oxide, yellow iron oxide, phthalocyanine blue, phthalocyanine green, molybdate red, chromium titanate, and earth pigments, such as ochres, green earths, umbers and burnt or raw Siennas. For use in hiding compositions pigments are generally employed in an amount not higher than 150% by weight, preferably 50-125% by weight, based on the alkyd resin (calculated as dry matter). As examples of suitable sag control agents may be mentioned inorganic agents such organically modified magnesium montmorillonites, for instance those that are available under the trade marks Bentone 27 and 38 of National Lead Co., and thixotropic alkyd resins based on polyamide or polyurethane (available from Bayer under the trade mark Alkydal F67 thix or from Cray Valley under the trade mark Gelkyd 9135 W), preferably used in a suitable organic solvent, but preferably adducts of a diisocyanate, for instance hexamethylene diisocyanate, and a monoamine or hydroxymonoamine having 1 to 5 aliphatic carbon atoms, such as benzylamine, adducts of a symmetrical aliphatic or homocyclic diisocyanate and a monoamine or diamine having at least a primary amino group and ether group, and adducts of an isocyanurate trimer of a diisocyanate containing 3-20 carbon atoms and an amine having one or more primary amino groups.

The composition may be applied to the substrate in any convenient manner such as by roller coating, spraying, brushing, sprinkling, flow coating or dipping. It is preferred that the composition should be applied by brush. Suitable substrate materials are pretreated or non-pretreated metals or synthetic materials and pretreated or non-pretreated wood, concrete, cement, brick, paper or leather. Examples of suitable metals include iron, steel and aluminium. The coat applied may be very suitably cured at ambient temperature of, say, 0°-40°C. If desired, the curing may take place at elevated temperature, i.e. at temperatures higher than 40°C, by which the curing time can be shortened.

The invention will be further described in the following examples, which are not to be construed as limiting the scope of the invention. By "parts" are to be understood herein parts by weight and by "%", percentage by weight. The solids content is determined in accordance with DIN 53216 upon heating for 1 hour at 120°C. The colour is determined in accordance with the Gardner 1933-scale and the viscosity with the aid of an Epprecht viscometer at 20°C and expressed in Pa.s. The values for the acid number and the hydroxyl number are indicated in mg. KOH per gramme of resin. The flow is rated visually on an 0 to 12 scale, where 0 is very poor and 12 is very good. The sagging tendency is determined by applying the composition by brush to a horizontal tin plate panel in a coating thickness of 100 µm at a temperature of 20°C and subsequently placing the panel in a vertical position. The flow down in mm of the wet paint is measured. A sag of 20 mm is still acceptable. The dust-free drying time is determined in accordance with NEN 5331; it is the time (in hours) it takes for an applied composition so to dry that fine sand no longer adheres to the coat of paint. A dust-free drying time 5 hours is acceptable. One month after application the gloss is determined at an angle of 20°, in conformity with ISO 2813. As a measure of the hiding power the contrast ratio (expressed in %) is measured in accordance with ISO 2814-1973 (E) on a coat of the composition applied in a thickness of 60 µm and kept at a temperature of 20°C over a period of 24 hours. The Persoz hardness of the coat is determined in conformity with ISO 1522 (expressed in sec.) after keeping the coat at a temperature of 20°C over a period of 2 weeks. The fineness of a pigment-containing composition is determined in accordance with NEN 5327. The flash point is determined in accordance with

4

DIN 53213. As siccative mixture was used a 59%-solution in white spirit of a mixture of 7% of cobalt octoate, 46% of zirconium octoate and 47% of calcium octoate, unless otherwise indicated. The hydrocarbon solvent which was used in diluting the composition to an application viscosity of 1 Pa.s was a mixture having a boiling point between 180° and 220°C of about 17% of an aromatic hydrocarbon and about 83% of an aliphatic hydrocarbon, available under the trade mark Shellsol H of Shell Chemical. The anti-skinning agent used was methylethyl ketoxime. In all the examples the composition was applied to the substrate in a thickness of 80 μm. For the determination of the sagging tendency the substrate used was tin plate; for the other determinations use was made of glass.

## Preparation of Alkyd resin A

1402,0 parts of safflower oil, 147,0 parts of wood oil, 125,4 parts of pentaerythritol, 6,6 parts of dipentaerythritol and 1,3 parts of lithium ricinoleate were intermixed and heated for 3 hours to a temperature of 250°C. At this temperature the mass was stirred until a good solubility of 1 part of the mass in 3 parts of ethanol was attained. Subsequently, the reaction mixture was cooled to a temperature of 160°C, after which successively 257,0 parts of trimethylol propane diallyl ether, 128,0 parts of phthalic anhydride and 190,0 parts of trimellitic anhydride were added to the reactor contents. Then the mass was heated for 2 hours to 240°C, at which temperature it was kept until an acid number of 6,7 was attained.

After cooling and removal by distillation under reduced pressure of xylene, which had been used for the azeotropic removal of the water formed during polycondensation, 2195,0 parts of an alkyd resin having the following properties were obtained:
Solids content 99,8%
Viscosity 5,5
Colour 7-8
Acid number 6,1
Hydroxyl number 16
Solubility parameter 9,47
Calculated number average molecular weight 1663
Average functionality 2,00

## Preparation of Alkyd resin B

1000,0 parts of safflower oil fatty acid and 202,0 parts of dipentaerythritol were intermixed and subjected to polycondensation at a temperature of 230°C until an acid number of 6,0 was attained. Subsequently, the reaction mixture was cooled, after which successively 172,4 parts of trimethylol propane diallyl ether, 110,6 parts of trimellitic anhydride and 60 parts of xylene were added to the reactor contents. Then the mass was heated for 2 hours to a temperature of 240°C, at which it was kept until an acid number of 9,9 was attained. The xylene was subsequently removed from the reaction mixture in the same way as indicated for alkyd resin A. Obtained were 1390,0 parts of an alkyd resin having the following properties:
Solids content 99,7%
Viscosity 3,75
Colour 7-8
Acid number 7,8
Hydroxyl number 18
Solubility parameter 9,31
Calculated number average molecular weight 2186
Average functionality 2,43

## Preparation of Alkyd resin C

1013,0 parts of soy-bean oil fatty acid and 200,0 parts of pentaerythritol were intermixed and subjected to polycondensation at a temperature of 240°C until an acid number of 5,0 was attained. Subsequently, the reaction mixture was cooled to a temperature of 210°C, after which successively 207,0 parts of trimethylol propane diallyl ether, 184,7 parts of trimellitic anhydride and 60 parts of xylene were added to the reactor contents. Then the mass was heated for 2 hours to a temperature of 240°C, at which it was kept until an acid number of 11,5 was attained. The xylene was subsequently removed from the reaction mixture in the same way as indicated for Alkyd resin A. Obtained were 1495,0 parts of an alkyd resin having the following properties:

Solids content  99,8%
Viscosity  4,1
Colour  6-7
Acid number  10,8
Hydroxyl number  22
Solubility parameter  9,47
Calculated number average molecular weight  1880
Average functionality  2,27


Preparation of Alkyd resin D

1138,0 parts of linseed oil fatty acid and 266,0 parts of dipentarythritol were intermixed and subjected to polycondensation at a temperature of 220°C until an acid number of 5,0 was attained. Subsequently, the reaction mixture was cooled, after which successively 156,0 parts of trimethylol propane diallyl ether, 196,0 parts of phthalic anhydride and 70 parts of xylene were added to the reactor contents. Then the mass was heated for 2 hours to a temperature of 240°C, at which it was kept until an acid number of 12,8 was attained. The xylene was subsequently removed from the reaction mixture in the same way as indicated for Alkyd resin A. Obtained were 1650,0 parts of an alkyd resin having the following properties:

Solids content  99,8%
Viscosity  4,91
Colour  8-9
Acid number  11,3
Hydroxyl number  20
Solubility parameter  9,60
Calculated number average molecular weight  2120
Average functionality  2,12


Preparation of Alkyd resin E

717,8 parts of soy-bean oil, 262,5 parts of linseed oil, 116,4 parts of hydrogenated colophonium, 65,7 parts of pentaerythritol, 85,0 parts of dipentaerythritol and 0,5 parts of lithium ricinoleate were intermixed and heated for 3 hours to a temperature of 260°C. The reaction mixture was kept at this temperature until the mass in the reaction vessel had a clear appearance and 1 part of the reactor contents was properly soluble in 3 parts of ethanol. Subsequently, the reaction mixture was cooled to a temperature of 200°C and successively 148,8 parts of trimethylol propane diallyl ether and 248,8 parts of hexahydrophthalic anhydride and 40 parts of xylene were added to the reactor contents. Then the mass was heated for 3 hours to a temperature of 240°C, at which it was kept until an acid number of 9,9 was attained. After removal of the xylene from the reaction mixture in the same way as in the case of Alkyd resin A 105,0 parts of isophoron diisocyanate were added to the reaction mixture. The mass was subsequently kept at a temperature of 100°C until the content of the isocyanate groups in the resin mass was lower than 0,05%. Obtained were 1700,0 parts of an alkyd resin having the following properties:

Solids content  99,5%
Viscosity  9,31
Colour  4-5
Acid number  8,9
Hydroxyl number  13
Solubility parameter  9,59
Calculated number average molecular weight  2097
Average functionality  2,00

### Preparation of Alkyd resin F

1150,0 parts of safflower oil fatty acid, 68,3 parts of benzoic acid, 71,5 parts of monopentaerythritol and 130,7 parts of dipentaerythritol were intermixed and subjected to polycondensation at a temperature of 230°C until an acid number of 50,0 was attained. Subsequently, the reaction mixture was cooled, after which successively 183,0 parts of trimethylol propane monoallyl ether, 146,4 parts of trimellitic anhydride and 65 parts of xylene were added to the reactor contents. Then the mass was heated for 2 hours to a temperature of 240°C, at which it was kept until an acid number of 10,0 was attained. The xylene was subsequently removed from the reaction mixture in the same way as indicated for Alkyd resin A. Obtained were 1635,0 parts of an alkyd resin having the following properties:
Solids content 99,8%
Viscosity 8,52
Colour 6-7
Acid number 8,7
Hydroxyl number 20
Solubility parameter 9,45
Calculated number average molecular weight 2001
Average functionality 2,45

### Preparation of comparative Alkyd resin G

The procedure for preparing Alkyd resin C was repeated, except that no trimethylol propane diallyl ether was used and instead of the pentaerythritol 304,0 parts of trimethylol propane were used. Obtained were 1400,0 parts of an alkyd resin having the following properties:
Solids content 99,7%
Viscosity 9,0
Colour 7-8
Acid number 11,2
Hydroxyl number 22
Solubility parameter 9,40
Calculated number average molecular weight 2249
Average functionality 1,73

### Preparation of comparative Alkyd resin H

The procedure of preparing Alkyd resin D was repeated, except that the dipentaerythritol and the trimethylol propane diallyl ether together were replaced with 238,0 parts of pentaerythritol. Obtained were 1460,0 parts of alkyd resin having the following properties:
Solids content 99,8%
Viscosity 3,91
Colour 7-8
Acid number 11,5
Hydroxyl number 21
Solubility parameter 9,69
Calculated number average molecular weight 2030
Average functionality 1,65

### Preparation of comparative Alkyd resin I

1108,0 parts of soy-bean oil, 218,7 parts of pentaerythritol, 10,9 parts of dipentaerythritol and 1,0 part of lithium ricinoleate were intermixed and heated for 3 hours to a temperature of 260°C. The reaction mixture was kept at this temperature until the mass in the reaction vessel had a clear appearance and 1 part of the reactor contents was properly soluble in 3 parts of ethanol. Subsequently, the reaction mixture was cooled to a temperature of 210°C and successively 414,0 parts of phthalic anhydride and 40 parts of xylene were added to the reactor contents. Then the mass was heated for 3 hours to a temperature of 250°C, at which it was kept until an acid number of 9,0 was attained. After cooling to 150°C and removal of the xylene from the reaction mixture in the same way as in the case of Alkyd resin A 300 parts of white spirit were added to the reaction mixture. Obtained were 2000,0 parts of an alkyd resin solution having the following properties:

Solids content 85,0%

Viscosity 81

Acid number 7,7

Hydroxyl number 44

Solubility parameter 10,24

Calculated number average molecular weight 4766

Average functionality 1,90

## Example 1

For the preparation of a clear lacquer 92,65 parts of Alkyd resin A were mixed with 3,24 parts of an adduct of hexamethylene diisocyanate and benzylamine as sag control agent, with 9,58 parts of the siccative mixture and with 0,74 parts of the anti-skinning agent. After the resulting composition had been kept at room temperature for 24 hours, it was brought to application viscosity with the hydrocarbon solvent. The composition had a solids content of 88,0 and a flash point of 60°C. The properties of the coating are given in the Table.

## Example 2

For the preparation of a white high-gloss paint 33,9 parts of Alkyd resin A were mixed with 0,33 parts of the anti-skinning agent and 16,0 parts of a mixture of 50,0% of Alkyd resin A, 10,4% of the adduct of hexamethylene diisocyanate and benzylamine and 39,6% of an aromatic hydrocarbon having a boiling point between 180° and 220°C (available under the trade mark Solvesso-150 of Esso). Subsequently, 46,6 parts of rutile titanium dioxide were added to the resulting mixture and ground to a particle size not greater than 10 μm. Finally, 4,17 parts of the siccative mixture were added to the mixture and the resulting composition was kept at room temperature for 24 hours and subsequently brought to application viscosity with the hydrocarbon solvent. The composition had a solids content of 85,4% and a flash point of 61°C. The properties of the coating are given in the Table.

## Example 3

For the preparation of a red high-gloss paint Example 2 was repeated, except that Alkyd resin B instead of Alkyd resin A and 56,8 parts of red iron oxide (hematite) instead of the titanium dioxide were used and 4,30 parts of the siccative mixture were applied. The composition had a solids content of 86,3% and a flash point of 60°C. The properties of the coating are given in the Table.

## Example 4

For the preparation of a white satin-gloss paint 21,9 parts of Alkyd resin C were mixed with successively 43,8 parts of rutile titanium dioxide, 25,1 parts of Alkyd resin C, 10,0 parts of a synthetically precipitated silicic acid (available under the trade mark OK 412 of Degussa) as gloss-reducing agent and 18,0 parts of a mixture consisting of 50,0% of Alkyd resin C, 10,4% of the adduct of hexamethylene diisocyanate and benzylamine and 39,6% of an aromatic solvent having a boiling point between 180° and 220°C (available under the trade mark Solvesso-150 of Esso). This mixture was ground to a particle size not greater than 30 μm. Finally, 0,46 parts of the anti-skinning agent were added to the mixture and the resulting composition was kept at room temperature for 24 hours and subsequently brought to application viscosity with the hydrocarbon solvent. The composition had a solids content of 85,5% and a flash point of 59°C. The properties of the coating are given in the Table.

## Example 5

For the preparation of a white primer 41,6 parts of Alkyd resin D were mixed successively with 6,35 parts of an aromatic solvent having a boiling point between 180° and 220°C (available under the trade mark Solvesso-150 of Esso), 3,65 parts of a paste consisting of 10% of a modified clay (available under the trade mark Bentone 38 of National Lead Co.), 9% of cobalt naphthenate, 5% of ethanol and 76% of the aforementioned hydrocarbon solvent as sag control agent. Subsequently, there were still added 3,67 parts of diatomaceous earth, 25,0 parts of rutile titanium dioxide, 14,1 parts of gloss-reducing agent from Example 4 and 5,2 parts of zinc oxide. The mixture thus prepared was ground to a particle size not greater than 30 m. To 92,4 parts of the ground mixture there were finally added 0,70 parts of the anti-skinning agent and 7,8 parts of a 50,0% solution in white spirit of 1,95 parts of lead octoate, 1,50 parts of zirconium octoate and 0,45 parts of cobalt octoate. After the resulting composition had been kept at room temperature for 24 hours, it was brought to application viscosity with the hydrocarbon solvent. The composition had a solids content of 86,0% and a flash point of 56°C. The properties of the coating are given in the Table.

## Example 6

Example 2 is repeated, except that use was made of Alkyd resin E instead of Alkyd resin A. The composition had a solids content of 83,0% and a flash point of 59°C.

## Example 7

Example 3 was repeated, except that use was made of Alkyd resin F instead of Alkyd resin B. The composition had a solids content of 82,2% and a flash point of 57°C.

## Example 8

For comparison, Example 2 was repeated, except that use was made of Alkyd resin G instead of Alkyd resin A. The composition had a solids content of 82,7% and a flash point of 60°C.

## Example 9

For comparison, Example 4 was repeated, except that use was made of Alkyd resin H instead of Alkyd resin C. The composition had a solids content of 85,5% and a flash point of 59°C.

## Example 10

For comparison, Example 2 was repeated, except that use was made of 46,8 parts of Alkyd resin I instead of the 33,9 parts of Alkyd resin A and 25,1 parts of a mixture of 63,7% of Alkyd resin I, 6,7% of the adduct of hexamethylene diisocyanate and benzylamine and 29,6% of an aromatic solvent with a boiling point between 180° and 220°C (available under the trade mark Solvesso-150 of Esso) instead of the 16,0 parts of the similar mixture. Further, use was made of 4,3 parts instead of 4,17 parts of the siccative mixture. The composition had a solids content of only 70,4% and a flash point of 58°C. A decrease in the amount of solvent such that a solids content of 80% was obtained resulted in a composition which had a viscosity higher than 10 Pa.s and was very viscous.

## Example 11

Also for comparison, Example 10 was repeated, except that a mixture of 37,1 parts of Alkyd resin I and 9,63 parts of safflower oil was used instead of the 46,8 parts of Alkyd resin I. The composition had a solids content of 77,4% and a flash point of 60°C.

## Example 12

Also for comparison, Example 10 was again repeated, except that use was made of a mixture of 9,73 parts of Alkyd resin I and 25,01 parts of trimethylol propane diallyl ether ester having a molecular weight of 550 instead of the 46,8 parts of Alkyd resin I and that 20,0 parts of a mixture of 70,4% of Alkyd resin I, 8,0% of the adduct of hexamethylene diisocyanate and benzylamine and 21,6% of the aromatic solvent having a boiling point between 180° and 220°C were used instead of the 25,13 parts of the similar mixture. The composition had a solids content of 86,2% and a flash point of 59°C.

Table

| Composition of Example: | Properties of the compositions | | | | | |
|---|---|---|---|---|---|---|
| | Flow | Sagging tendency | Dust-free drying time | Gloss | Hiding power | Hard-ness |
| 1 | 12 | 15 | 5,0 | 70 | – | 65 |
| 2 | 11 | 5 | 4,0 | 60 | 97,4 | 61 |
| 3 | 10-11 | 7 | 4,5 | 65 | 97,5 | 57 |
| 4 | 10-11 | 4 | 4,0 | 30 | 97,4 | 58 |
| 5 | 10 | 8 | 4,0 | 10 | 97,5 | 67 |
| 6 | 11 | 10 | 4,5 | 55 | 97,1 | 75 |
| 7 | 11 | 12 | 5,0 | 50 | 96,9 | 65 |
| 8 | 10-11 | 10 | 7,0 | 60 | 97,0 | 30 |
| 9 | 10-11 | 7 | 6,5 | 30 | 97,3 | 35 |
| 10 | 12 | 15 | 3,5 | 78 | 94,7 | 80 |
| 11 | 11 | 4 | 6,5 | 50 | 95,8 | 35 |
| 12 | 8 | 10 | 9,0 | 52 | 97,5 | 28 |

**Claims**

1. A coating composition having a solids content of at least 80% by weight, based on an oxidatively drying binder, a siccative and an organic solvent with a flash point of at least 55°C, characterized in that the oxidatively drying binder is an alkyd resin which is built up on the one hand from 30-85 mole % of an ethylenically unsaturated monocarboxylic acid containing 6-24 carbon atoms and 15-70 mole % of a polycarboxylic acid containing 4-36 carbon atoms and on the other hand from 10-80 mole % of a hydroxyl and/or epoxy compound containing an allyl ether group and 20-90 mole % of an at least trivalent hydroxyl compound containing 3-24 carbon atoms, which alkyd resin has a number average molecular weight of 1400-2800, an acid number of 0-30, a hydroxyl number of 0-80 and a solubility parameter of 8,5-11,0 and the organic solvent has a boiling point in the range of from 140°-260°C.

2. A coating composition according to claim 1, characterized in that the alkyd resin is partly built up from safflower oil fatty acid, sunflower oil fatty acid and/or linseed oil fatty acid as the monocarboxylic acid.

3. A coating composition according to claim 1, characterized in that the alkyd resin is partly built up from 50-80 mole % of monocarboxylic acid, calculated on the total amount of carboxylic acids.

4. A coating composition according to claim 1, characterized in that the alkyd resin is partly built up from 20-50 mole % of the polycarboxylic acid, calculated on the total amount of carboxylic acids.

5. A coating composition according to claim 1, characterized in that the alkyd resin is partly built up from an allyl ether group-containing hydroxyl or epoxy compound having 1-5 hydroxyl groups or 1-2 epoxy groups and 1-5 allyl ether groups as the allyl ether group-containing compound.

6. A coating composition according to claim 1, characterized in that the alkyd resin is partly built up from a monoallyl ether or diallyl ether of trimethylol propane as the allyl ether group-containing compound.

7. A coating composition according to claim 1, characterized in that the alkyd resin is partly built up from 15-70 mole % of an allyl ether groups-containing compound, calculated on the total amount of hydroxyl and epoxy compounds.

8. A coating composition according to claim 1, characterized in that the at least trivalent hydroxyl compound from which the alkyd resin is partly built up contains 3-12 carbon atoms.

9. A coating composition according to claim 1, characterized in that the alkyd resin is partly built up from 25-85 mole % of the at least trivalent hydroxyl compound, calculated on the total amount of hydroxyl and epoxy compounds.

10. A coating composition according to claim 1, characterized in that the alkyd resin has a number average molecular weight of 1600-2600.

11. A coating composition according to claim 1, characterized in that the alkyd resin has an acid number of 5-15.

12. A coating composition according to claim 1, characterized in that the alkyd resin has a hydroxyl number of 10-50.

13. A coating composition according to claim 1, characterized in that the alkyd resin has a solubility parameter of 9,0-10,5.

14. A coating composition according to claim 1, characterized in that the alkyd resin has an average functionality of 2,0-4,0.

15. A coating composition according to claim 1, characterized in that the alkyd resin has an average functionality of 2,0-3,0.

16. A coating composition according to claim 1, characterized in that the organic solvent has a boiling point in the range of from 170°-230°C.

17. A coating composition according to claim 1, characterized in that the organic solvent is an aliphatic, cycloaliphatic or aromatic hydrocarbon containing on average 9-16 carbon atoms per molecule.

18. A coating composition according to claim 1, characterized in that the composition contains one or more natural or synthetic, transparent or non-transparent pigments.

19. A coating composition according to claim 1, characterized in that the composition contains a pigment in an amount of not more than 150% by weight, based on the alkyd resin (calculated as dry matter).

20. A coating composition according to claim 1, characterized in that the composition contains a sag control agent.

21. A coating composition according to claim 20, characterized in that the sag control agent is an adduct of a diisocyanate, such as hexamethylene diisocyanate, and a monoamine or hydroxymonoamine containing 1-5 aliphatic carbon atoms, such as benzylamine, an adduct of a symmetrical aliphatic or homocyclic diisocyanate and a monoamine or diamine containing at least a primary amino group and ether group, or an adduct of an isocyanurate trimer of a diisocyanate having 3-20 carbon atoms and an amine having one or more primary amino groups.

22. A process of coating a substrate with a coating composition, characterized in that use is made of a coating composition according to any one of the claims 1-21.

Claims for the following Contrating State : ES

1. A process of coating a substrate with a coating composition having a solids content of at least 80% by weight, based on an oxidatively drying binder, a siccative and an organic solvent with a flash point of at least 55°C, characterized in that the oxidatively drying binder is an alkyd resin which is built up on the one hand from 30-85 mole % of an ethylenically unsaturated monocarboxylic acid containing 6-24 carbon atoms and 15-70 mole % of a polycarboxylic acid containing 4-36 carbon atoms and on the other hand from 10-80 mole % of a hydroxyl and/or epoxy compound containing an allyl ether group and 20-90 mole % of an at least trivalent hydroxyl compound containing 3-24 carbon atoms, which alkyd resin has a number average molecular weight of 1400-2800, an acid number of 0-30, a hydroxyl number of 0-80 and a solubility parameter of 8,5-11,0 and the organic solvent has a boiling point in the range of from 140°-260°C, and that the coated substrate is cured at ambient or elevated temperature.

2. A process according to claim 1, characterized in that the alkyd resin is partly built up from safflower oil fatty acid, sunflower oil fatty acid and/or linseed oil fatty acid as the monocarboxylic acid.

3. A process according to claim 1, characterized in that the alkyd resin is partly built up from 50-80 mole % of monocarboxylic acid, calculated on the total amount of carboxylic acids.

4. A process according to claim 1, characterized in that the alkyd resin is partly built up from 20-50 mole % of the polycarboxylic acid, calculated on the total amount of carboxylic acids.

5. A process according to claim 1, characterized in that the alkyd resin is partly built up from an allyl ether group-containing hydroxyl or epoxy compound having 1-5 hydroxyl groups or 1-2 epoxy groups and 1-5 allyl ether groups as the allyl ether group-containing compound.

6. A process according to claim 1, characterized in that the alkyd resin is partly built up from a monoallyl ether or diallyl ether of trimethylol propane as the allyl ether group-containing compound.

7. A process according to claim 1, characterized in that the alkyd resin is partly built up from 15-70 mole % of an allyl ether groups-containing compound, calculated on the total amount of hydroxyl and epoxy compounds.

8. A process according to claim 1, characterized in that the at least trivalent hydroxyl compound from which the alkyd resin is partly built up contains 3-12 carbon atoms.

9. A process according to claim 1, characterized in that the alkyd resin is partly built up from 25-85 mole % of the at least trivalent hydroxyl compound, calculated on the total amount of hydroxyl and epoxy compounds.

10. A process according to claim 1, characterized in that the alkyd resin has a number average molecular weight of 1600-2600.

11. A process according to claim 1, characterized in that the alkyd resin has an acid number of 5-15.

12. A process according to claim 1, characterized in that the alkyd resin has a hydroxyl number of 10-50.

13. A process according to claim 1, characterized in that the alkyd resin has a solubility parameter of 9,0-10,5.

14. A process according to claim 1, characterized in that the alkyd resin has an average functionality of 2,0-4,0.

15. A process according to claim 1, characterized in that the alkyd resin has an average functionality of 2,0-3,0.

16. A process according to claim 1, characterized in that the organic solvent has a boiling point in the range of from 170°-230°C.

17. A process according to claim 1, characterized in that the organic solvent is an aliphatic, cycloaliphatic or aromatic hydrocarbon containing on average 9-16 carbon atoms per molecule.

18. A process according to claim 1, characterized in that the composition contains one or more natural or synthetic, transparent or non-transparent pigments.

19. A process according to claim 1, characterized in that the composition contains a pigment in an amount of not more than 150% by weight, based on the alkyd resin (calculated as dry matter).

20. A process according to claim 1, characterized in that the composition contains a sag control agent.

21. A process according to claim 20, characterized in that the sag control agent is an adduct of a diisocyanate, such as hexamethylene diisocyanate, and a monoamine or hydroxymonoamine containing 1-5 aliphatic carbon atoms, such as benzylamine, an adduct of a symmetrical aliphatic or homo cyclic diisocyanate and a monoamine or diamine containing at least a primary amino group and ether group, or an adduct of an isocyanurate trimer of a diisocyanate having 3-20 carbon atoms and an amine having one or more primary amino groups.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | DE-A-3 111 101 (H. SCHNEIDEL) * Claims 1,4,7,8; page 3, lines 1-5; page 6 * | 1 | C 09 D 3/64 |
| A | BE-A- 565 437 (I.C.I. LTD) * Claims 1-6 * | 1 | |
| A | NL-A-7 709 285 (HOECHST AG) * Claims 1-12 * | 1 | |
| A | US-A-4 049 599 (J.C. LOTT) * Claim 1; column 3, lines 17-25 * | 1 | |
| A | US-A-3 253 938 (T. HUNT) * Claims 1-5 * | 1,5-7 | TECHNICAL FIELDS SEARCHED (Int. Cl.4) |
| A | NL-A-6 711 793 (BAYER) * Claims 1-4 * | 1,20-22 | C 09 D C 08 G |
| A | PATENT ABSTRACTS OF JAPAN, vol. 6, no. 106 (C-108)[984], 16th June 1982; & JP-A-57 36 158 (ASAHI PEN K.K.) 26-02-1982 * Whole abstract * | 1 | |

-----

The present search report has been drawn up for all claims

| Place of search | Date of completion of the search | Examiner |
|---|---|---|
| THE HAGUE | 03-06-1987 | DECOCKER L. |